# EUROPEAN PATENT SPECIFICATION

(11) **EP 0 499 300 B1**
(45) Date of publication and mention of the grant of the patent: **24.05.1995**
(21) Application number: 92200176.3
(22) Date of filing: 21.01.1992
(51) Int. Cl.: H02B 1/40

(54) **Box for electric equipment installed on a support and holder used therewith**
Gehäuse für auf einem Trägerelement installierte elektrische Einrichtung und Haltevorrichtung hierfür
Boîte d'équipement électrique installée sur un support et dispositif de fixation utilisée à cet effet

(30) Priority: 29.01.1991 BE 9100079
(43) Date of publication of application: 19.08.1992
(73) Proprietor: VYNCKIER Naamloze Vennootschap, B-9000 Gent (BE)
(72) Inventor: de Rouck, Etienne Lucien, B-9820 Merelbeke (BE)
(74) Representative: Debrabandere, René

(56) References cited:
- DE-A- 2 546 152
- GB-A- 2 175 456

## Description

The invention relates to a box for electric equipment installed at least on one carrier, said box containing a frame which is closed on one side by a back, in which a plurality of positioning means are provided on the interior face of said back.

Electric equipment, and by this switches and fuses are understood, is usually not directly installed on the back but on a carrier such as a plate, a rail or a strip which is installed on the back.

In most cases, the equipment is already installed on the carrier before the carrier is installed in the box which is fixed to the wall with its back.

In known boxes of the aforementioned kind, the positioning means are formed by projections on the back which are provided with an opening to install the fixation means. These fixation means include screws which are directly screwed through an opening in the projections or of bolts which are screwed into bushes which are installed in the opening in the projections. The projections thus define the location of the screws or bolts and thus the position of the carrier. The installation of the screws and the bolts is however not easy. On the one hand, the screws must be installed near the back and the accessibility, especially when equipment has already been installed on the carrier, is sometimes limited. On the other hand, the correct location of the point of a screw or a bolt in front of an opening in a projection is difficult as the support covers said opening and the opening is difficult to find. This is also true for the installation of a second screw as the carrier, as long as it is only fixed by one point to the back, is inclined to tilt downward under the influence of gravity. Such a box is disclosed in DE-A-2 546 152.

The invention aims at solving these disadvantages and to provide for a box of the aforementioned kind in which the installation of a carrier into the box can be done rather easily.

With this goal in mind, the box includes at least two holders for each carrier, one extremity of each holder cooperating with at least one positioning means, said holders being equipped with at least one receiving part for at least one carrier, and means to hold each of said holders with regard to the back.

As the carriers are not installed directly but by means of holders and that said holders cooperate with positioning means and thus can be positioned easily, the positioning of the carrier is simple as well. The fixation of the holders is, as they are positioned, easy. The holders are normally installed on the carrier before said carrier, equipped with the equipment or not, is placed in the box.

In a particular embodiment of the invention the positioning means on the back are projections while it cooperates with at least one end of the holder equipped with an corresponding notch cooperating with such positioning means.

The carrier can be screwed tightly on the receiving part but, in an exceptional embodiment of the invention, this receiving part is formed by at least one groove in which part of the carrier can be installed.

Advantageously this groove is in two parts with a first part of the groove in which the part of a first carrier can be slid into and a second groove part which at least partially overlaps with the first one and in which a part of another carrier in the absence of the first one, can be slid into.

In this embodiment a thinner or a thicker carrier can be installed as desired choice in one and the same groove.

In an advantageous embodiment of the invention the box includes holders consisting in several receiving parts at different distances of their extremity cooperating with the positioning means on the back.

In this embodiment one carrier can be installed at different distances from the back or several carriers can be fixed on the back in superposition through one and the same holder. In some cases it is advisable to install the electric equipment at different distances from the back of the box. In aforementioned known boxes this is achieved by using spacers which must be installed at a distance from the back between it and a carrier. Another spacer must be used for each different distance so that a large number of different parts is required in order to obtain a choice of space between the carriers and the back in these known boxes.

In another particular embodiment of the invention the positioning means are installed on the back along at least two walls facing each other on the frame and at least one the exterior part of these walls and at a distance from the back, possessing at least one part of the wall directed inward which is also equipped with positioning means, while the holders not only include one extremity which cooperates with at least one of the positioning means on the back along one wall of the frame but also cooperate with their other extremity with at least one of the aforementioned positioning means of said wall on the part of the wall directed inward.

In this embodiment a solid and precise positioning of the holders is achieved. The holders can be made relatively larger with regard to the back so that, in an embodiment with several receiving parts a large number of these receiving parts can be provided.

The part of the wall extending inward is formed in an efficient manner by an edge extending inward. The positioning means on the part of the wall directed inward are formed in an efficient manner by projections on said part of the wall, while the cooperating extremity of the holders is equipped with a part fitting over at least one projection on the protruding edge.

In an particular and preferably applied embodiment of the invention, the means to stop each of the positioned holders include at least one click connection device with the related wall of the frame.

No screw nor bolts are required in this embodiment which especially facilitates the assembly of the holder and, consequently, the brackets. This embodiment is especially important in the aforementioned case in which a part of a wall directed inward is equipped with positioning means with two walls facing each other. In this case, the click connection device includes efficiently a springy tongue hooked up behind a part of the wall directed inward of the corresponding wall of the frame. This part of the wall can be the same part of the wall as aforementioned provided with positioning means, more particularly in the case the latter part of the wall is an edge extending inward.

Obviously, the means to stop the holders can also include screws which are screwed through the holders into the back or the frame.

Other particularities and advantages of the invention will appear from the following description of a box for receiving electric equipment installed therein on at least one carrier and of a holder used in connection with it according to the invention. This description is only given as an example and does not limit the invention. The reference numbers are related to the drawings included herewith in which :
figure 1 is a front view of half of a box according to the invention ;
figure 2 is a sectional view according to the line II-II in figure 1 ;
figure 3 is a sectional view according to the line III-III in figure 1 ;
figure 4 is a sectional view according to the line IV-IV in figure 2 ;
figure 5 is a rear view of a holder from the box according to the preceding drawings ;
figure 6 is a sectional view similar to that in figure 3, but referring to another embodiment of the holder ;
figure 7 is a sectional view according to the line VII-VII in figure 6.

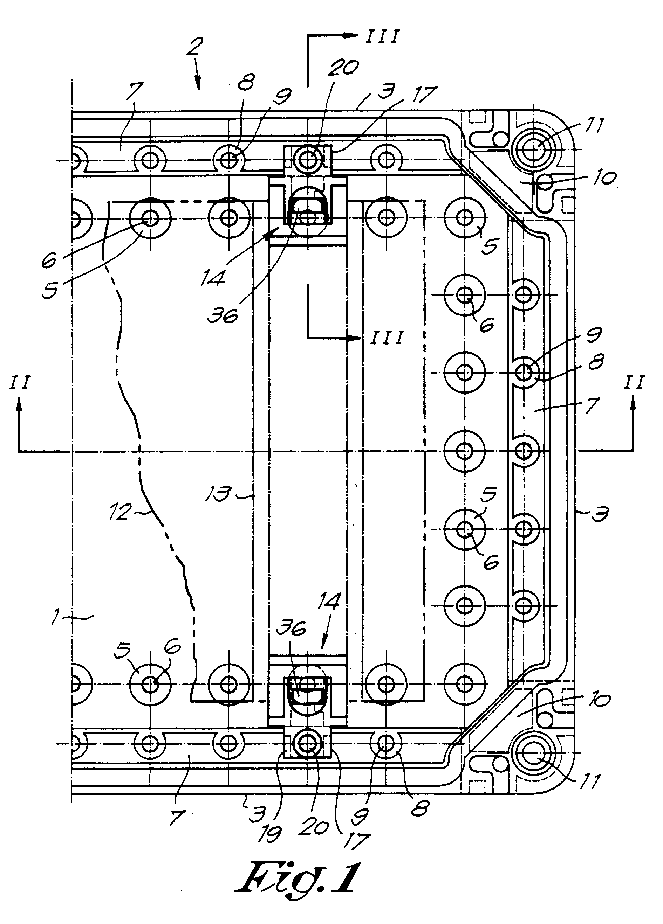

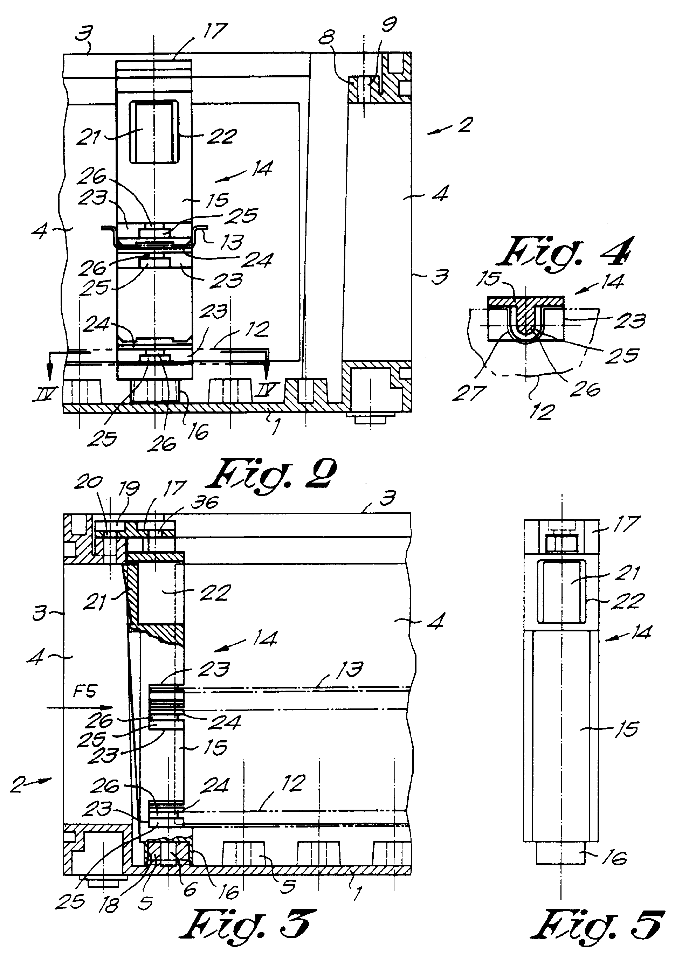

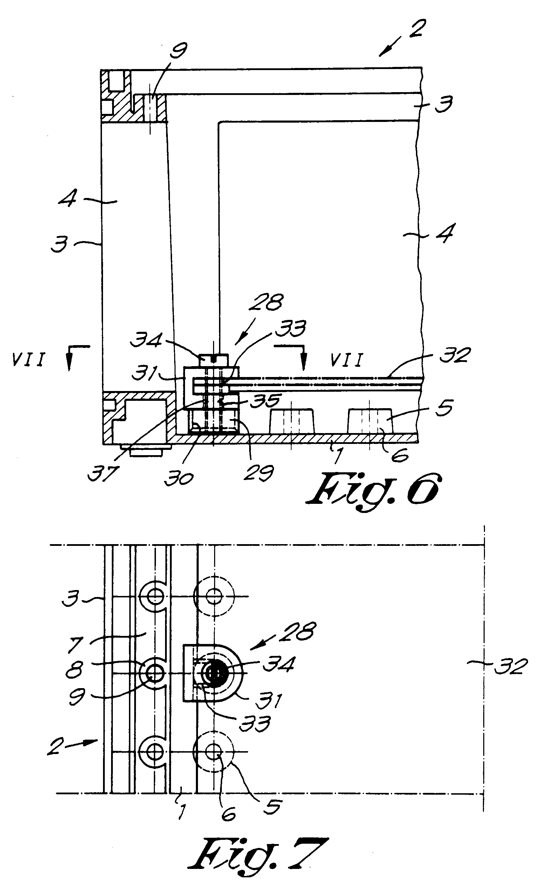

The box according to figures 1 to 3 includes in the usual way a rectangular back 1 and a frame 2 with four walls 3 installed on it. The box is a modular box and the four walls are provided with large openings 4 with which the interior of the box can be connected with the interior of neighbouring boxes. The box is fixed to the wall with its back.

According to the invention round and somewhat conically extending projections 5, which are equipped with a central opening 6, are located on the inside of the back 1 along the four walls 3. On the inside of the four walls 3, and at a distance from the back 1, there is an inward extending edge 7. The edges 7 extend along the edge of the openings 4 in the walls 3 away from the back 1 and thus at a small distance from the extreme edge of the walls 3. The edges 7 form together with the wall 3 U-shaped channels whose openings are in a direction away from the wall 1. At regular distances, on each edge 7, and namely on the side of the bottom of the U-shaped channel away from the back 7, are round conical extending projections 8 provided with a central opening 9. The projections 8 are located in such way that one projection 8 is always facing a projection 5 on the back 1, in which the latter projection 5 is placed slightly inward than the projection 8.

The walls 3 are connected to each other in the four corners by corner parts with which the outer edges of the walls 3 link up. A cover can be fixed on the corner parts 10. The corner parts 10 are for this purpose equipped with openings 11 for fixation means.

The box contains a number of holders 14 for the fixation of carriers 12 and 13. Each holder 14 consists of an oblong body 15, a round foot 16 at one of its extremities and a head 17 with a part extending out of the body at the other end of the body 15.

The foot 16 is equipped with a central round recess 18 whose debouchment is enlarging into a funnel shape and which fits on a projection 5 on the back 1. The part of the head 17 extending out of the body is, on the side facing the back 1 when the holder 14 has been placed over a projection 5 with its foot 16, provided with a projection formed by two legs 19 which, in the aforementioned position of the holder 14, fits in the channel shaped edge 7 over a projection 8 of said edge. An opening 20 is provided, between both legs, in the extending part of the head 17 which is placed exactly across the opening 9 of the projection 8.

In order to hold a holder 14 in aforementioned position with regard to the back 1 a self tapping screw or, if the opening 9 is provided with a screw thread, a bolt can be screwed through the opening 20 in the opening 9 so that the head 17 is fixed to the edge 7. In most cases a similar bolt or screw may be redundant and only be an accessory fixation means in other cases as each holder 14 is equipped with a springy tongue 21; This tongue 21 is placed near the head 17, facing an opening 22 in the body and is springy as it is made out of plastic as is the remainder of the holder 14. When the holder 14 is in the aforementioned position and that shown in the figures 1 to 3, the freely springy extremity of the tongue 21 at a distance from the back 1, said extremity being located partially outside the body 15 on the side of the protruding part of the head 17, just at the side of the edge 7 directed toward the back 1. When installing the holder 14 and thus the installation of the foot 16 over a projection 5 and, at the same time, of the two legs 19 at each side of a projection 8, the tongue 21 is slightly deformed elastically and clicks in behind the edge 7.

In the side of the body 15 facing that along which the extending part of the head 17 extends, a number of grooves 23 and 24 are provided. These grooves are directed at right angles to the longitudinal direction of the body 15 and are in two parts, i.e. formed by two groove parts overlapping each other respectively for two different carriers 12 and/or 13.

A groove 23 consists of a thick but relatively narrow groove part on the side of the foot 16 and a thinner but wider groove part on the side of the head 17. In fact, the groove 23 extends in a U-shape around a support with a part 23 at the side of the foot 16 extending around the outside of the part 26 on the side of the head 17. A thick as well as a thin plate-shaped carrier can be inserted in a groove 23. A thin plate equipped with a notch in its edge which fits around the part 26 of the support 25, 26 can be fitted into the part of the groove 23 away from the foot 16 and then rests on the part 25 of the support 25, 26. A plate with a thickness equal to the width of the groove 23 must have a notch 27 in its edge which is such that the plate fits around the part 25. When such a carrier formed by a thick plate, as shown in figures 1 to 5, is located in a groove 23, as shown in figures 1 to 5, it will rest around the part 25 on the wall of the groove 23 situated on the side of the foot. The thin plate with a thickness equal to the height of the part 26 as well as the thick plate with a thickness equal to the height of the parts 25 and 26 of the support together join with their side facing the foot 16 with the side wall of the groove 23 situated on this side so that the side of both plates away from the back 1 is located at the same distance from the back 1.

Several equal grooves 23 are provided in the body 15 and, in figures 1 to 5, a carrier 12 formed by a plate is shown in the groove 23 nearest to the foot 16. This carrier 12 is fitted in a groove 23 for four holders 14, which are installed in pairs along the side walls 3 facing each other in the aforementioned manner. These holders 14 are first slid onto a carrier 12 before they are installed against the back 1.

A groove 24 is provided between each pair of adjacent grooves 23. This groove 24 includes a middle groove part which possesses a rectangular section in parallel with the interior of the body 15 and serving for receiving a carrier in the shape of a lath. This part of the groove partially coincides with a part of the groove which extends over the full width of the body 15 on the side of the foot 16 and having the shape of a section of a part of a DIN-rail on its inside.

The figures 1 to 3 show such a DIN-rail shaped carrier 13 inserted in the groove 24 situated the furthermost away from the foot 16. The rail has been slid with both ends into the grooves 24 of two holders 14 facing each other of the group of four holders 14 which carry the carrier 12. These two holders as well are first slid on the rail before they are installed in place.

Electric equipment which, for simplicity's sake were not shown in the drawings, are installed on the carrier 12 and the carrier 13 before said carriers are fixed to the box by means of the holders 14. The installation of said carriers can be done fast and easily. The positioning of the holders 14 is, due to the fact that they cooperate with a projection 5 on the back 1 and a projection 8 on the edge 7, very simple. No screws nor bolts are necessary to retain the holders 14 with respect to the back 1 due to the tongue 21 even though the possibility still exists to obtain an additional fixation by means of a small screw which is screwed through an opening 20 in the head 17 of the holder in the opening 9 of a protection 8. Varying forms of carriers can be used and these carriers can be installed at different distances from the back by means of the holders.

A cover plate can be placed on the four holders 14 on the side away from the back 1. This cover plate can be connected to the heads 17 of the holders 14 by means of a fast fitting said heads having a notch 36 provided for a fast fitting.

Another, less complicated embodiment of the box is shown in the figures 6 and 7 which mainly differs from the previous one in that the holders 14 are replaced by holders 28 which do not extend between the back 1 and a projecting edge 7 but having a limited height and only cooperate with a projection 5 on the back 1. The projecting edge 7 on the side walls 3 may be present and can for instance be used to fix a cover plate or a support plate on it, but is not required.

Each holder 28 includes a foot 29 with a notch 30 which is identical with the foot 16 of the aforementioned holders 14 and thus fitting over the notch 30 over a projection 5 on the back 1. A body 31 joins with the foot 29 which is of a very small height and that, contrary to the body 15 of the aforementioned holders 14 is provided only with one groove 23, extend around a two part support 25, 26 as with a holder 14. The holder 28 can thus exclusively accept carriers formed by plates or flat laths and, more particularly, at choice a thick or thin plate in the way as described with respect to the first embodiment.

In figures 6 and 7 a thin plate 32 supported by a holder 28 is shown. This plate 32 is provided with a notch 33 in its edge which fits around the smallest part 26 of the support 25, 26. This plate 32 rests on the projecting end of part 26 outside of part 25.

As the body 31 of a holder 28 is not equipped with a springy tongue and, moreover, does not reach up to an edge 7, the holder must be retained in another way and namely by means of a screw or bolt 34 against the back 1. For this purpose, passing through the body 31 and in the extension of the axis of the notch 30, an opening 35 provided with a narrowing 37 extends in which said screw or bolt 34 is pressed in, so that this screw or bolt cannot drop out of the opening 35.

The bolt 34 is pressed into the holder 28 to fit the holder in the box. This holder is moreover slid over the carrier 32, together with one or more other holders as it would be the case, before said carrier is fitted on the box. By means of their notch 30, the exact fitting of the holders 28 on the projections 5 is very simple. Once the holders are positioned it suffices to screw in the bolts 34. These bolts then force themselves through the notches 30 in the central opening 6 of the projection 5 on which they are placed, said opening 6 being provided with a thread or including a threaded bush.

Instead of a bolt 34, the holder 28 can be fixed to the back 1 with a self tapping screw, in which case the opening 6 in the projections 5 do not have to be threaded.

In the embodiment with a holder 28 according to figures 6 and 7 as well, the installation of one or more carriers, with or without electric equipment, in the box is simple. The bolts or screws do not have to be held as they already have been pressed into the holders. Two different kinds of carriers can be used.

The invention is by no means limited to the embodiments described above and many changes can be made to the described embodiments within the scope of the invention as defined in the claims.

More particularly the positioning means on the back and on the projecting edge on the side walls must not necessarily be projections. They may also be notches, for instance. In that manner, the projecting edge can be provided with an opening while the head of the holders in the first embodiment is provided with a projection which fits in such an opening.

The part of the walls of the frame directed inward does not necessarily be a continuous edge. This part of the wall can consist in a series of projections which each carry one or more positioning means.

The location and the number of grooves in the body as well are not necessarily as described and shown.

The carriers are not exclusively one of the described embodiments and it is not required that two carriers are installed in the box at the same time.

If the positioning means on the back are projections, these must not necessarily be of a round shape. The projections can also be connected to each other by for instance reinforcement ribs, in which case the holders will possibly be provided with an adequate notch for said ribs.

## Claims

1. Box for receiving electrical equipment installed therein on at least one carrier (12,13 or 32), said box consisting of a frame (2) which is closed on one side by a back (1), a plurality of positioning means (5) installed on the inside of said back (1), characterized in that it contains at least two holders (14 or 28) for each carrier (12,13 or 32) one extremity of each holder cooperating with at least one positioning means (5) for each carrier (12,13 or 32), said holders (14 or 28) being equipped with at least one receiving part (23 and/or 24) for at least one carrier (12,13 or 32) and means (21 or 34) to hold each of said holders (14 or 28) with respect to the back (1).

2. Box according to the aforementioned claim, characterized in that the positioning means (5) on the back (1) are projections, while the extremity of the holder (14 or 28) cooperating with at least one of such positioning means (5) is provided with one corresponding notch (18 or 30).

3. Box according to the aforementioned claim, characterized in that the projections (5) on the back (1) are round and end somewhat conically.

4. Box according to any of the aforementioned claims, characterized in that the receiving part (23 and/or 24) is formed by at least one groove into which a part of the carrier (12,13 or 32) can be fitted.

5. Box according to the aforementioned claim, characterized in that the groove (23 or 24) is in two parts with a first part of the groove into which a part of the first carrier (12,13 or 32) can be slid and a second part of the groove at least partially overlapping the first one and into which a part of another carrier (12,13 or 32) in the absence of the first one can be slid.

6. Box according to the aforementioned claim, characterized in that the groove (23) fits in a u_shaped form around a central support (25,26) being part of the body (15) of a holder (14 or 28) and possessing two parts of which the part (25) on the side of the back (1) is larger than the other part (26) while a carrier (12 or 32) is provided with a notch (27 or 33) fitting over one of the parts (25 or 26) or over both parts.

7. Box according to any of the claims 5 and 6, characterized in that the two parts of the groove of a groove (23) are located in such way and possess such a form that the two plate shaped carriers (12 or 32) fitting in it are located at the same distance from the back with their side facing the back (1) when they are fitted in the groove (23).

8. Box according to any of the aforementioned claims, characterized in that it contains holders (14 and 28) consisting in several receiving parts (23 and/or 24) at different distances from their extremity cooperating with the positioning means (5) on the back (1).

9. Box according to any of the aforementioned claims, characterized in that the positioning means (5) on the back (1) are placed at least across two vertical walls (3) of the frame (2) facing each other on the back (1) and at least two of these walls (3) possess on their inside at least one part of the wall (7) directed inward equipped with positioning means (8) as well, while the holders (14) not only include one extremity cooperating with at least one of the positioning means (5) on the back (1) along one wall (3) of the frame (2) but also cooperate with their other extremity with at least one of the aforementioned positioning means (8) on the inward directed part of the wall (7) of said wall (3).

10. Box according to the aforementioned claim, characterized in that the frame (2) is provided on its four walls (3) with a part of a wall (7) directed inward provided with positioning means (8) while positioning means (5) are placed on the back (1) along these four walls (3).

11. Box according to any of the claims 9 and 10, characterized in that the part of the wall (7) directed inward on a wall (3) of the frame is a protruding edge.

12. Box according ot any of the claims 9 to 11, characterized in that the positioning means (8) on the part of the wall (7) directed inward are projections facing away from the back (1), while the extremity of the holders (14) cooperating with it is provided with a part fitting at least over one projection (8) on the protruding edge (7).

13. Box according to any of the aforementioned claims, characterized in that the means (21 or 34) to hold each of the positioned holders (14) are at least provided with a click connection (21,7) with the corresponding wall (3) of the frame (2).

14. Box according to the aforementioned claim, characterized in that the click connection (21,7) consists of a springy tongue (21) on the holders (14) cooperating with a part of a wall (7) directed inward of a wall (3) of the frame (2).

15. Box according to the claims 11 and 14 characterized in that the part of the wall (7) directed inward with which the springy tongue (21) cooperates is the edge (7) projecting inward which is provided with positioning means (8).

16. Box according to one of the claims 1 to 12, characterized in that the means (21 or 34) to hold the holders (14 or 28) include screws or bolts (34) which are screwed through the holders (28) in the back (1) or the frame (2).

17. Box according to the aforementioned claim, characterized in that the screws or bolts (34) in the holders (28) are held before these holders (28) are connected with the back (1).

18. Box according to any of the aforementioned claims, characterized in that it is a modular box and that the walls (3) of the frame (2) are provided with openings (4).

## Patentansprüche

1. Gehäuse für die Aufnahme von darin auf zumindest einem Trägerelement (12, 13 oder 32) installierte elektrische Einrichtungen, wobei besagtes Gehäuse einen Rahmen (2) enthält, der auf einer Seite durch eine Rückwand (1) geschlossen ist, wobei eine Vielzahl von Positioniermitteln (5) auf der Innenseite besagter Rückwand (1) angebracht ist, dadurch gekennzeichnet, daß es zumindest zwei Haltevorrichtungen (14 oder 28) für jedes Trägerelement (12, 13 oder 32) umfaßt, wobei ein Ende jeder Haltevorrichtung mit zumindest einem Positioniermittel (5) für jedes Trägerelement (12, 13 oder 32) usammenwirkt und besagte Haltevorrichtungen (14 oder 28) mit zumindest einem aufnehmenden Teil (23 und/oder 24) für zumindest ein Trägerelement (12, 13 oder 32) und Mitteln (21 oder 34) zum Halten jeder der besagten Haltevorrichtungen (14 oder 28) unter Bezug auf die Rückwand (1) ausgestattet sind.

2. Gehäuse gemäß dem vorgenannten Anspruch, dadurch gekennzeichnet, daß die Positioniermittel (5) an der Rückwand (1) Vorsprünge sind, während das Ende der Haltevorrichtung (14 oder 28), das mit zumindest einem der derartigen Positioniermittel (5) zusammenwirkt, mit einem über einstimmenden Schlitz (18 oder 30) versehen ist.

3. Gehäuse gemäß dem vorgenannten Anspruch, dadurch gekennzeichnet, daß die Vorsprünge (5) an der Rückwand (1) rund sind und etwas konisch enden.

4. Gehäuse gemäß einem der vorgenannten Ansprüche, dadurch gekennzeichnet, daß das aufnehmende Teil (23 und/oder 24) durch zumindest eine Nut gebildet wird, in welche ein Teil des Trägerelements (12, 13 oder 32) eingepaßt werden kann.

5. Gehäuse gemäß dem vorgenannten Anspruch, dadurch gekennzeichnet, daß die Nut (23 oder 24) aus zwei Teilen besteht, mit einem ersten Nutteil, in das ein Teil des ersten Trägerelements (12, 13 oder 32) geschoben werden kann, und einem zweiten Nutteil, das zumindest teilweise das erste überlappt und in das ein Teil eines anderen Trägerelements (12, 13 oder 32) in Abwesenheit des ersten geschoben werden kann.

6. Gehäuse gemäß dem vorgenannten Anspruch, dadurch gekennzeichnet, daß die Nut (23) U-förmig um ein zentrales Trägerelement (25, 26) paßt, das Teil des Körpers (16) einer Haltevorrichtung (14 oder 28) ist und zwei Teile aufweist, wovon das Teil (25) an der Seite der Rückwand (1) größer ist als das andere Teil (26), während ein Trägerelement (12 oder 32) mit einem Schlitz (27 oder 33) vorgesehen ist, das über eines der Teile (25 oder 26) oder über beide Teile paßt.

7. Gehäuse gemäß einem der Ansprüche 5 und 6, dadurch gekennzeichnet, daß die beiden Nutteile einer Nut (23) so plaziert sind und eine solche Form besitzen, daß zwei hineinpassende plattenförmige Trägerelemente (12 oder 32), im selben Abstand zur Rückwand plaziert sind, wobei ihre Seiten der Rückwand (1) zugewandt sind, wenn sie in die Nut (23) eingepaßt sind.

8. Gehäuse gemäß einem der vorgenannten Ansprüche, dadurch gekennzeichnet, daß es Haltevorrichtungen (14 und 28) umfaßt, die aus mehreren aufnehmenden Teilen (23 und/ oder 24) in unterschiedlichen Abständen zu ihrem Ende bestehen, das mit den Positioniermitteln (5) an der Rückwand (1) zusammenwirkt.

9. Gehäuse gemäß einem der vorgenannten Ansprüche, dadurch gekennzeichnet, daß die Positioniermittel (5) an der Rückwand (1) entlang zumindest zweier vertikaler Wände (3) des Rahmens (2), die einander auf der Rückwand (1) gegenüberliegen, gebildet sind, und zumindest zwei dieser Wände (3) an ihrer Innenseite zumindest ein nach innen gerichtetes Wandteil (7) besitzen, das ebenfalls mit Positioniermitteln (8) ausgestattet ist, während die Haltevorrichtungen (14) nicht nur ein Ende umfassen, das mit zumindest einem der Positioniermittel (5) an der Rückwand (1) entlang einer Wand (3) des Rahmens (2) zusammenwirkt, sondern auch mit ihrem anderen Ende mit zumindest einem der vorgenannten Positioniermittel (8) auf dem nach innen gerichteten Wandteil (7) besagter Wand (3) zusammenwirken.

10. Gehäuse gemäß dem vorgenannten Anspruch, dadurch gekennzeichnet, daß der Rahmen (2) an seinen vier Wänden (3) mit einem nach innen gerichteten Wandteil (7) versehen ist, das mit Positioniermitteln (8) versehen ist, während Positioniermittel (5) auf der Rückwand (1) entlang diesen vier Wänden (3) angebracht sind.

11. Gehäuse gemäß einem der Ansprüche 9 und 10, dadurch gekennzeichnet, daß das nach innen gerichtete Wandteil (7) an einer Wand (3) des Rahmens eine vorspringende Kante ist.

12. Gehäuse gemäß einem der Ansprüche 9 bis 11, dadurch gekennzeichnet, daß die Positioniermittel (8) an dem nach innen gerichteten Wandteil (7) von der Rückwand (1) abgewandte Vorsprünge sind, während das Ende der Haltevorrichtungen (14), das damit zusammenwirkt, mit einem Teil ausgestattet ist, das zumindest über einen Vorsprung (8) an der vorspringenden Kante (7) paßt.

13. Gehäuse gemäß einem der vorgenannten Ansprüche, dadurch gekennzeichnet, daß die Mittel (21 oder 34) zum Halten jeder der positionierten Haltevorrichtungen (14) zumindest mit einer Einrastverbindung (21,7) mit der entsprechenden Wand (3) des Rahmens (2) versehen sind.

14. Gehäuse gemäß dem vorgenannten Anspruch, dadurch gekennzeichnet, daß die Einrastverbindung (21,7) aus einer federnden Zunge (21) an der Haltevorrichtung (14) besteht, die mit einem nach innen gerichteten Wandteil (7) einer Wand (3) des Rahmens (2) zusammenwirkt.

15. Gehäuse gemäß den Ansprüchen 11 und 14, dadurch gekennzeichnet, daß das nach innen gerichtete Wandteil (7), mit dem die federnde Zunge (21) zusammenwirkt, die mit Positioniermitteln (8) ausgestattete, nach innen vorspringende Kante (7) ist.

16. Gehäuse gemäß einem der Ansprüche 1 bis 12, dadurch gekennzeichnet, daß die Mittel (21 oder 34) zum Halten der Haltevorrichtungen (14 oder 28) Schrauben oder Bolzen (34) umfassen, die durch die Haltevorrichtungen (28) in die Rückwand (1) oder den Rahmen (2) geschraubt werden.

17. Gehäuse gemäß dem vorgenannten Anspruch, dadurch gekennzeichnet, daß die Schrauben oder Bolzen (34) in den Haltevorrichtungen (28) gehalten werden, bevor diese Haltevorrichtungen (28) mit der Rückwand (1) verbunden werden.

18. Gehäuse gemäß einem der vorgenannten Ansprüche, dadurch gekennzeichnet, daß es ein Modulgehäuse ist und daß die Wände (3) des Rahmens (2) mit Öffnungen (4) versehen sind.

## Revendications

1. Boîte pour le logement d'un équipement électrique monté dans cette dernière sur au moins un support (12, 13 ou 32), ladite boîte étant constituée par un cadre (2) qui est fermé d'un côté par un dos (1), par plusieurs moyens de positionnement (5) installés du côté interne dudit dos (1), caractérisée en ce qu'elle contient au moins deux dispositifs de maintien (14 ou 28) pour chaque support (12, 13 ou 32), une extrémité de chaque dispositif de maintien coopérant avec au moins un moyen de positionnement (5) pour chaque support (12, 13 ou 32), lesdits dispositifs de maintien (14 ou 28) étant équipés d'au moins une partie réceptrice (23 et/ou 24) pour au moins un support (12, 13 ou 32) et des moyens (21 ou 34) pour maintenir chacun desdits dispositifs de maintien (14 ou 28) par rapport au dos (1).

2. Boîte selon la revendication susmentionnée, caractérisée en ce que le moyen de positionnement (5) sur le dos (1) sont des saillies, tandis que l'extrémité des dispositifs de maintien (14 ou 28) coopérant avec au moins un desdits moyens de positionnement (5) est muni d'une encoche correspondante (18 ou 30).

3. Boîte selon la revendication susmentionnée, caractérisée en ce que les saillies (5) sur le dos (1) sont arrondies et se terminent de manière quelque peu conique.

4. Boîte selon l'une quelconque des revendications susmentionnées, caractérisée en ce que la partie réceptrice (23 et/ou 24) est formée par au moins une rainure dans laquelle peut venir s'insérer une partie du support (12, 13 ou 32).

5. Boîte selon la revendication susmentionnée, caractérisée en ce que la rainure (23 ou 24) est en deux parties, une première partie de la rainure dans laquelle peut venir coulisser une partie du premier support (12, 13 ou 32) et une seconde partie de la rainure chevauchant au moins partiellement la première et dans laquelle on peut faire glisser une partie d'un autre support (12, 13 ou 32) en l'absence du premier.

6. Boîte selon la revendication susmentionnée, caractérisée en ce que la rainure (23) vient s'insérer en formant un U autour d'un support central (25, 26) faisant partie du corps (16) d'un dispositif de maintien (14 ou 28) et possédant deux parties, dont la partie (25) du côté du dos (1) est plus grande que l'autre partie (26), tandis qu'un support (12 ou 32) est muni d'une encoche (27 ou 33) venant se disposer par-dessus une des parties (25 ou 26) ou par-dessus les deux parties.

7. Boîte selon l'une quelconque des revendications 5 et 6, caractérisée en ce que la disposition des deux parties de la rainure (23) et la forme qu'elles possèdent sont telles que les deux supports (12 ou 32) en forme de plaques, qui viennent s'y insérer, sont situés à la même distance par rapport au dos avec leurs côtés opposés au dos (1) lorsqu'ils sont insérés dans la rainure (23).

8. Boîte selon l'une quelconque des revendications susmentionnées, caractérisée en ce qu'elle contient des dispositifs de maintien (14 et 28) constitués par plusieurs parties réceptrices (23 et/ou 24) à des distances différentes de leur extrémité coopérant avec les moyens de positionnement (5) sur le dos (1).

9. Boîte selon l'une quelconque des revendications susmentionnées, caractérisée en ce que les moyens de positionnement (5) sur le dos (1) sont placés au moins transversalement par rapport à deux parois verticales (3) du cadre (2) en opposition mutuelle sur le dos (1), et au moins deux de ces parois (3) possèdent, sur leur côté interne, au moins une partie de la paroi (7) dirigée vers l'intérieur et également équipée de moyens de positionnement (8), tandis que les dispositifs de maintien (14), non seulement englobent une extrémité coopérant avec au moins un des moyens de positionnement (5) sur le dos (1) le long d'une paroi (3) du cadre (2), mais coopèrent également, avec leur autre extrémité, avec au moins un des moyens de positionnement (8) susmentionnés sur la partie (7) de ladite paroi (3) orientée vers l'intérieur.

10. Boîte selon la revendication susmentionnée, caractérisée en ce que le cadre (2) est muni, sur ses quatre parois (3), d'une partie de paroi (7) orientée vers l'intérieur, munie de moyens de positionnement (8), tandis que des moyens de positionnement (5) sont placés sur le dos (1) le long de ces quatre parois (3).

11. Boîte selon l'une quelconque des revendications 9 et 10, caractérisée en ce que la partie de la paroi (7) orientée vers l'intérieur sur une paroi (3) du cadre est un bord saillant.

12. Boîte selon l'une quelconque des revendications 9 à 11, caractérisée en ce que les moyens de positionnement (8) sur la partie de la paroi (7) orientée vers l'intérieur sont des saillies se détournant du dos (1), tandis que l'extrémité des dispositifs de maintien (14) coopérant avec eux est munie d'une partie venant se disposer au moins par-dessus une saillie (8) sur le bord saillant (7).

13. Boîte selon l'une quelconque des revendications susmentionnées, caractérisée en ce que les moyens (21 ou 34) pour maintenir en position chacun des dispositifs de maintien (14) sont au moins munis d'une connexion à déclic (21, 7) avec la paroi correspondante (3) du cadre (2).

14. Boîte selon la revendication susmentionnée, caractérisée en ce que la connexion à déclic (21, 7) est constituée par une languette élastique (21) sur les dispositifs de maintien (14) coopérant avec une partie de paroi (7) orientée vers l'intérieur d'une paroi (3) du cadre (2).

15. Boîte selon les revendications 11 et 14, caractérisée en ce que la partie de paroi (7) orientée vers l'intérieur, avec laquelle coopère la languette élastique (21), est le bord (7) faisant saillie vers l'intérieur, qui est muni de moyens de positionnement (8).

16. Boîte selon l'une quelconque des revendications 1 à 12, caractérisée en ce que les moyens (21 ou 34) destinés à maintenir les dispositifs de maintien (14 ou 28) englobent des vis ou des boulons (34) qui sont vissés à travers les dispositifs de maintien (28) dans le dos (1) ou dans le cadre (2).

17. Boîte selon la revendication susmentionnée, caractérisée en ce que les vis ou les boulons (34) dans les dispositifs de maintien (23) sont serrés avant de relier ces dispositifs de maintien (28) au dos (1).

18. Boîte selon l'une quelconque des revendications susmentionnées, caractérisée en ce qu'il s'agit d'une boîte modulaire et en ce que les parois (3) du cadre (2) sont munies d'ouvertures (4).
